# EUROPÄISCHE PATENTANMELDUNG

(11) **EP 4 112 669 A1**
(43) Veröffentlichungstag der Anmeldung: **04.01.2023**
(21) Anmeldenummer: 21183017.9
(22) Anmeldetag: 01.07.2021
(51) Int. Cl.: C08G 18/24, C08G 18/79, C08G 18/67, C08G 18/28, C08G 18/32, C08G 18/08, C08G 18/10, C08G 18/81, C08J 5/04, C09D 175/14, C03C 25/326

(54) **NICHT-IONISCH HYDROPHILIERTE POLYURETHAN-DISPERSIONEN MIT METHACRYLAT-DOPPELBINDUNGEN**

(71) Anmelder: Covestro Deutschland AG, 51373 Leverkusen (DE)
(72) Erfinder: DOERR, Sebastian, 40593 Düsseldorf (DE); JANSSEN, Petra, 47647 Kerken (DE); LUDEWIG, Michael, 51519 Odenthal (DE); GIPPERICH, Ingo, 51373 Leverkusen (DE)
(74) Vertreter: Levpat

(57) **Zusammenfassung**

Die vorliegende Erfindung betrifft eine Die vorliegende Erfindung betrifft eine wässrige UV-härtbare Dispersion mindestens enthaltend ein Reaktionsprodukt aufgebaut aus a) mindestens einem Polyisocyanat mit einer durchschnittlichen Isocyanat-Funktionalität von mindestens 2,2, von denen bevorzugt mindestens ein Polyisocyanat ein oligomeres Polyisocyanat mit Urethan-, Biuret-, Allophanat-, Iminooxadiazindion- und/oder Isocyanuratstruktureinheiten ist, b) mindestens eine monohydroxyfunktionelle, Methacryloylgruppen aufweisende Verbindung, c) mindestens eine Komponente, die nichtionisch hydrophilierend wirkende Gruppen enthält und mindestens eine weitere isocyanatreaktive Gruppe aufweist, d) gegebenenfalls mindestens ein di- und/oder polyfunktionelles Amin oder Hydroxyamin als Kettenverlängerer und e) gegebenenfalls sonstige monomere, oligomere und/oder polymere Substanzen, die gegebenenfalls auch weitere ungesättigte Gruppen aufweisen können, wobei das Reaktionsprodukt keine ionogenen oder ionisch hydrophilierend wirkenden Gruppen aufweist, ein Verfahren zur ihrer Herstellung, die Verwendung der Dispersion zur Herstellung von Glasfaserschlichten, eine Glasfaserschlichte mindestens enthaltend eine solche Dispersion, Glasfasern versehen mit einer Schlichte erhältlich unter Verwendung einer solchen Dispersion, ein Verfahren zur Herstellung von glasfaserverstärkten Kunststoffen, und einen entsprechenden glasfaserverstärkten Kunststoff.

## Beschreibung

Die vorliegende Erfindung betrifft eine wässrige UV-härtbare Dispersion mindestens enthaltend ein Reaktionsprodukt aufgebaut aus a) mindestens einem Polyisocyanat mit einer durchschnittlichen Isocyanat-Funktionalität von mindestens 2,2, von denen bevorzugt mindestens ein Polyisocyanat ein oligomeres Polyisocyanat mit Urethan-, Biuret-, Allophanat-, Iminooxadiazindion- und/oder Isocyanuratstruktureinheiten ist, b) mindestens eine monohydroxyfunktionelle, Methacryloylgruppen aufweisende Verbindung, c) mindestens eine Komponente, die nichtionisch hydrophilierend wirkende Gruppen enthält und mindestens eine isocyanatreaktive Gruppe aufweist, d) gegebenenfalls mindestens ein di- und/oder polyfunktionelles Amin oder Hydroxyamin als Kettenverlängerer und e) gegebenenfalls sonstige monomere, oligomere und/oder polymere Substanzen, die gegebenenfalls auch weitere ungesättigte Gruppen aufweisen können, wobei das Reaktionsprodukt keine ionogenen oder ionisch hydrophilierend wirkenden Gruppen aufweist, ein Verfahren zur ihrer Herstellung, die Verwendung der Dispersion zur Herstellung von Glasfaserschlichten, eine Glasfaserschlichte mindestens enthaltend eine solche Dispersion, Glasfasern versehen mit einer Schlichte erhältlich unter Verwendung einer solchen Dispersion, ein Verfahren zur Herstellung von glasfaserverstärkten Kunststoffen, und einen entsprechenden glasfaserverstärkten Kunststoff.

Wässrige Beschichtungsmittel auf Basis von funktionalisierten Polyisocyanaten sind dem Fachmann an sich bekannt. Sie werden beispielsweise zu einkomponentigen Beschichtungsmitteln kombiniert und bei der Beschichtung von Glasfasern, z.B. für Glasfaser-verstärkte Kunststoffe, eingesetzt. Nach Auftrag auf die Glasfasern wird zunächst das Wasser entfernt. Der entstehende Film, die so genannte Schlichte, wird durch Reaktion der latent enthaltenen Polyisocyanate vernetzt. Eine weitere Vernetzung durch Reaktion der in der Schlichte enthaltenen Polyisocyanate erfolgt dann beim Einarbeiten der Glasfasern in Kunststoffe.

Das Dokument EP 1 516 912 B1 offenbart eine Glasfaserschlichte-Zusammensetzung enthaltend mindestens ein wasserdispergierbares oder wasserlösliches, blockiertes Polyisocyanat (A), mindestens ein radikalisch polymerisierbare Gruppen enthaltendes Polyurethan (B) und einen Initiator (C), der eine radikalische Polymerisation auslösen kann.

Das Dokument DE 10 2009 008 949 A1 beschreibt strahlungshärtbare Beschichtungssysteme auf Basis wässriger Polyurethandispersionen enthaltend als Aufbaukomponenten eine oder mehrere oligomere oder polymere Verbindungen mit mindestens einer gegenüber lsocyanat reaktiven Gruppe und mindestens einer radikalisch copolymerisierbaren Gruppe, gegebenenfalls eine oder mehrere monomere Verbindungen, mit einer Hydroxyfunktion und mindestens einer (Meth)acrylatgruppe, Polyesterpolyole, gegebenenfalls weitere Polyole, eine oder mehrere Verbindungen mit mindestens einer gegenüber Isocyanat reaktiven Gruppe und zusätzlich ionische oder zur Ausbildung von ionischen Gruppen befähigte Gruppen oder eine Kombination von nichtionischen und ionischen oder zur Ausbildung von ionischen Gruppen befähigten Gruppen, die für die Polyurethandispersion dispergierend wirken, und organische Polyisocyanate.

Die aus dem Stand der Technik bekannten Acrylat- bzw. Methacrylat-funktionellen Beschichtungsmittel zeigen eine verbesserungsfähige Verträglichkeit in typischen Formulierungen für die Glasfaserschlichte, so dass beispielsweise die Verarbeitungszeit signifikant eingeschränkt ist. Ein Problem bei der Verwendung von funktionellen Silanen in Glasfaserschlichten ist, dass bei den komplexen Hydrolyse- und Kondensationsprozessen der übrigen Bestandteile in Kombination mit funktionellen Silanen in typischen Glasfaserschlichten oft (Zwischen)produkte entstehen, welche zu instabilen Systemen führen. Gut verträgliche Beschichtungsmittel für Glasfasern mit (reaktiven) Methacrylatgruppen sind im Stand der Technik nicht beschrieben.

Aufgabe der vorliegenden Erfindung war es daher, ein rein nicht-ionisch hydrophiliertes, funktionalisiertes, Methacrylatgruppen-haltiges Polyisocyanat, insbesondere zur Verwendung als Glasfaserschlichte, und ein Verfahren zu dessen Herstellung bereitzustellen. Eine weitere Aufgabe der vorliegenden Erfindung ist es, eine wässrige Dispersion eines entsprechenden Polyisocyanats mit einer ausreichend hohen Lagerstabilität bereitzustellen.

Diese Aufgaben werden erfindungsgemäß gelöst durch eine wässrige UV-härtbare Dispersion mindestens enthaltend ein Reaktionsprodukt aufgebaut aus
a) mindestens einem Polyisocyanat mit einer durchschnittlichen Isocyanat-Funktionalität von mindestens 2,2, von denen bevorzugt mindestens ein Polyisocyanat ein oligomeres Polyisocyanat mit Urethan-, Biuret-, Allophanat-, Iminooxadiazindion- und/oder Isocyanuratstruktureinheiten ist,
b) mindestens eine monohydroxyfunktionelle, Methacryloylgruppen aufweisende Verbindung,
c) mindestens eine Komponente, die nichtionisch hydrophilierend wirkende Gruppen enthält und mindestens eine isocyanatreaktive Gruppe aufweist,
d) gegebenenfalls mindestens ein di- und/oder polyfunktionelles Amin oder Hydroxyamin als Kettenverlängerer und
e) gegebenenfalls sonstige monomere, oligomere und/oder polymere Substanzen, die gegebenenfalls auch weitere ungesättigte Gruppen aufweisen können,
wobei das Reaktionsprodukt keine ionogenen oder ionisch hydrophilierend wirkenden Gruppen aufweist.

Die erfindungsgemäßen Dispersionen weisen somit ein funktionalisiertes Polyisocyanat auf, welches durch energiereiche Strahlung oder durch Zugabe von Radikalinitiatoren wie von peroxidischen Härtern oder Härtern auf Azobasis polymerisierbare Methacrylatgruppen und keine freien Isocyanatgruppen mehr enthält.

Das in der erfindungsgemäßen UV-härtbaren Dispersion vorliegende Reaktionsprodukt enthält bevorzugt
35 bis 75 Gew. -%, besonders bevorzugt 40 bis 75 Gew.-%, ganz besonders bevorzugt 45 bis 65 Gew.-%, an Komponente a),
10 bis 50 Gew. -%, besonders bevorzugt 12 bis 35 Gew.-%, ganz besonders bevorzugt 14 bis 32 Gew.-% an Komponente b),
5 bis 40 Gew. -%, besonders bevorzugt 7 bis 30 Gew.-%, ganz besonders bevorzugt 15 bis 25 Gew.-% an Komponente c), und
gegebenenfalls 0,1 bis 10 Gew. -%, besonders bevorzugt 0,1 bis 9 Gew.-%, ganz besonders bevorzugt 0,1 bis 5 Gew.-% an Komponente d),
wobei sich die Prozentangaben von a) bis c) bzw. a) bis d) jeweils zu 100 Gew.-% ergänzen.

In einer bevorzugten Ausführungsform enthält die erfindungsgemäße UV-härtbare Dispersion 0,5 bis 25 Gew.%, bevorzugt 0,5 bis 10 Gew.% an Komponente e), wobei sich auch hier die Prozentangaben von a) bis c) und e) bzw. a) bis e) jeweils zu 100 Gew.-% ergänzen.

Die erfindungsgemäße Dispersion enthält gegebenenfalls Hilfsmittel und Zusatzstoffe, beispielsweise solche, die eine Aushärtung mit energiereicher Strahlung, wie z.B. Elektronenstrahlen oder UV-Strahlen oder eine radikalische Reaktion ermöglichen bzw. beschleunigen. In einer bevorzugten Ausführung enthält die Dispersion Stabilisatoren gegen eine frühzeitige Aushärtung, aus der Gruppe der Phenole, sterisch gehinderten Amine und/oder der Thiazine.

Die erfindungsgemäße Dispersion weist im Allgemeinen eine Säurezahl unter 50 mg KOH/g Polymer, bevorzugt unter 20 mg KOH/g Polymer, besonders bevorzugt unter 10 mg KOH/g Polymer, und besonders bevorzugt unter 5 mg KOH/g Polymer. Die Säurezahl gibt die Masse Kaliumhydroxid in mg an, die zur Neutralisation von 1 g der zu untersuchenden Probe erforderlich ist (Messung nach DIN EN ISO 660 (Fassung von 2009)). Die neutralisierten Säuren, also die entsprechenden Salze weisen naturgemäß keine oder eine reduzierte Säurezahl auf. Hier ist erfindungsgemäß die Säurezahl der korrespondierenden freien Säure entscheidend.

Die erfindungsgemäße Dispersion weist im Allgemeinen ein zeta-Potential von -50 bis +50 mV, bevorzugt -15 bis +15 mV und besonders bevorzugt -2 bis +10 mV, auf. Das zeta-Potential wird bestimmt durch Messung einer mit entmineralisiertem Wasser verdünnten Probe in einem "ZetaSizer 3000HSA" (Malvern Instruments, Herrenberg, Deutschland) bei 23°C.

Der Urethangruppengehalt (MG Urethangruppe = 59 g/mol) der erfindungsgemäßen Dispersion liegt im Allgemeinen bei 3 bis 30 Gew. -%, bevorzugt 10 bis 25 Gew. -%, jeweils bezogen auf Feststoffgehalt.

Erfindungsgemäß geeignete Polyisocyanate a) sind neben dem oligomeren Polyisocyanaten mit bevorzugt Urethan-, Biuret-, Allophanat-, Iminooxadiazindion- und/oder Isocyanuratstruktureinheiten, mindestens difunktionelle Polyisocyanate wie z.B. 1,4-, 1,3-, und/oder 1,2-Cyclohexandiisocyanat, 1-Methyl-2,4-diisocyanato-cyclohexan, 1-Methyl-2,6-diisocyanatocyclohexan, Tetramethylendiisocyanat, Octamethylendiisocyanat, Decamethylendiisocyanat, Dodecamethylendiisocyanat, H₆-2,4-und/oder -2,6- Diisocyanatotoluol, 4,4'-Diisocyanatodiphenylmethan, 2,4'-Diisocyanatodiphenylmethan, 2,2'-Diisocyanatodiphenylmethan, meta- und/oder para-Xylylendiisocyanat, 2,4-Diisocyanatotoluol und/oder 2,6-Diisocyanatotoluol, Isopropenyldimethyltoluylendiisocyanat, α,α,α,'α,'-Tetra-methyl-m- und/oder -p-Xylylendiisocyanat, 1,6-Hexamethylendiisocyanat, Trimethylhexandiisocyanat, Tetramethylhexandiisocyanat, Nonantriisocyanat, 1-Isocyanato-3,3,5 -trimethyl-5 -isocyanatomethylcyclohexan (Isophorondiisocyanat), 4,4'-Diisocyanato-dicyclohexylmethan und/oder 2,4'-Diisocyanato-dicyclohexylmethan und/oder 2,2'-Diisocyanato-dicyclohexylmethan, sowie Gemische dieser Diisocyantodicyclohexylmethane und derer mono- und dimethylsubstituierter Derivate, und/oder höherfunktionelle Umsetzungsprodukte, Homologe, Oligomere und/oder Polymere der genannten mindestens difunktionellen Polyisocyanate mit Urethan-, Biuret-, Carbodiimid-, Isocyanurat-, Allophanat-, Iminooxadiazindion- und/oder Uretdionstruktureinheiten. Es können anteilig auch monofunktionelle Isocyanate, wie z.B. Stearylisocyanat, Butylisocyanat, Phenylisocyanat, oder andere wie z.B. 3-Isocyanatopropyltrialkoxysilan mitverwendet werden.

Die durchschnittliche Isocyanat-Funktionalität der Polyisocyanatkomponente a) beträgt bevorzugt 2,2 bis 6, besonders bevorzugt 2,4 bis 5, ganz besonders bevorzugt 2,6 bis 4,5.

Die Polyisocyanat-Komponente a) weist bevorzugt eine Viskosität von weniger als 25000 mPa·s bei 23 °C, besonders bevorzugt von weniger als 15000 mPa·s bei 23 °C auf.

Bevorzugt besteht die Polyisocyanatkomponente a) zu mindestens 40 Gew. -% aus flüssigen oligomeren Polyisocyanaten auf Basis von Hexamethylendiisocyanat mit Isocyanurat-, Biuret-, Uretdion-, Carbodiimid-, Allophanat- und/oder Iminooxadiazindion-Struktureinheiten und zu höchstens 60 Gew. -% aus Isophorondiisocyanat, H₆-2,4- bzw. -2,6-Toluylidendiisocyanat, 1,6-Hexamethylen-diisocyanat, 4,4'-Diisocyanato-dicyclohexylmethan und/oder 2,4'-Diisocyanato-dicyclohexyl-methan und/oder 2,2'-Diisocyanato-dicyclohexyl-methan und/oder 2,4- bzw. 2,6-Toluylidendiisocyanat bzw. deren Umsetzungsprodukte mit Trimethylolpropan, Butandiol, Ethylenglykol, Diethylenglykol, Propylenglykol oder Neopentylglykol.

Besonders bevorzugt besteht die Polyisocyanatkomponente a) zu mindestens 70 Gew.- % aus oligomeren Polyisocyanaten auf Basis von Hexamethylendiisocyanat mit Biuret-, Iminooxadiazindion-, Allophanat- und/oder Isocyanuratstruktureinheiten und zu höchsten 30 Gew.-% aus Isophorondiisocyanat, 4,4'-Diisocyanato-dicyclohexylmethan und/oder 2,4'-Diisocyanato-dicyclohexylmethan und/oder 2,2'-Diisocyanato-dicyclohexyl-methan und/oder 2,4- bzw. 2,6-Toluylidendiisocyanat.

Geeignete Komponenten b) sind monohydroxyfunktionelle Methacryloylgruppen aufweisende Verbindungen wie z.B. Hydroxylethylmethacrylat, 2-/3-Hydroxypropylmethacrylat, Hydroxybutylmethacrylat, 2-/3-/4-Hydroxyethylmethacrylat, 2-/3-Hydroxypropylmethacrylat, 2-/3-/4-Hydroxybutylmethacrylat, Ethoxylierungs- und/oder Propoxylierungsprodukte der genannten Hydroxymethacrylate, Umsetzungsprodukte von Trimethylopropan, Glycerin und/oder Pentaerythrit bzw. deren Ethoxylierungs- und/oder Propoxylierungsprodukte mit 2 oder 3 Äquivalenten Methacrylsäure, Umsetzungsprodukte der genannten Hydroxymethacrylate mit Caprolacton, Umsetzungsprodukte von Monoepoxiden wie z.B. Cardura^{®} E10 (Monoepoxid, Hexion Speciality Chemicals, Niederlande) mit Methacrylsäure und Mischungen der genannten monohydroxyfunktionellen Methacryloylgruppen aufweisenden Verbindungen.

Erfindungsgemäß bevorzugt werden Hydroxyethylmethacrylat, Hydroxypropylmethacrylat und/oder Hydroxybutylmethacrylat als Komponente b) eingesetzt.

Weiterhin enthält die erfindungsgemäße Dispersion mindestens eine Komponente c), die nichtionisch hydrophilierend wirkende Gruppen enthält und mindestens eine weitere isocyanatreaktive Gruppe aufweist. Bevorzugt weist die erfindungsgemäß vorliegende Komponente c) eine oder zwei, bevorzugt eine, isocyanatreaktive Gruppe und nichtionisch hydrophilierende Struktureinheiten, bevorzugt auf Polyalkylenoxidbasis, auf.

Geeignete nichtionisch hydrophilierend wirkende Komponenten c) sind z.B. Polyoxyalkylenether, die mindestens eine Hydroxy- oder Aminogruppe enthalten. Diese Polyether enthalten einen Anteil von 30 bis 100 Gew. -% an Bausteinen, die vom Ethylenoxid abgeleitet sind. In Frage kommen linear aufgebaute Polyether einer Funktionalität zwischen 1 und 3, aber auch Verbindungen der allgemeinen Formel (I), 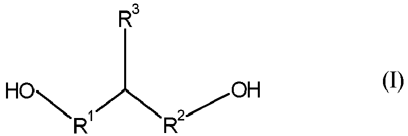 in welcher
- R¹ und R²: unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und
- R³: für einen alkoxyterminierten Polyethylenoxidrest steht.

Nichtionisch hydrophilierend wirkende Verbindungen sind beispielsweise auch einwertige, im statistischen Mittel 5 bis 70 Ethylenoxideinheiten pro Molekül aufweisende Polyalkylenoxidpolyetheralkohole, wie sie in an sich bekannter Weise durch Alkoxylierung geeigneter Startermoleküle zugänglich sind, siehe dazu z.B. Ullmanns Encyclopädie der technischen Chemie, 4. Auflage, Band 19, Verlag Chemie, Weinheim, Seiten 31 bis 38.

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonomethyl-, -monoethyl- bzw. -monobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol -% bevorzugt zu mindestens 50 mol -% aus Ethylenoxideinheiten bestehen.

Besonders bevorzugte nichtionische Verbindungen c) sind monohydroxyfunktionelle Polyalkylenoxidpolyether, die mindestens 75 mol-% Ethylenoxid-, besonders bevorzugt 100 mol-% Ethylenoxideinheiten und ein Molekulargewicht von 350 bis 2500 g/mol, besonders bevorzugt von 500 bis 1100 g/mol aufweisen.

Das in der erfindungsgemäßen Dispersion enthaltene Reaktionsprodukt weist keine ionogenen, d.h. potentiell ionischen, oder ionisch hydrophilierend wirkenden Gruppen auf. Bevorzugt weist das in der erfindungsgemäßen Dispersion enthaltene Reaktionsprodukt keine der im Folgenden genannten ionogenen oder ionisch hydrophilierend wirkenden Gruppen bzw. Verbindungen auf. Besonders bevorzugt weist das in der erfindungsgemäßen Dispersion enthaltene Reaktionsprodukt keine ionisch hydrophilierenden Gruppen auf, d.h. bevorzugt werden folgenden Bausteine bei der Umsetzung von a) bis e) nicht verwendet:
Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-alanin, 2-(2-Amino-ethylamino)-ethansulfonsäure, Ethylendiamin-propyl- oder butylsulfonsäure, 1,2- oder 1,3-Propylendiaminethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III), N-Methyl-diethanolamin, Verbindungen, die über Carboxy- oder Carboxylat- und/oder Sulfonatgruppen und/oder Ammoniumgruppen verfügen, insbesondere Verbindungen, die Carboxyl- und/oder Sulfonatgruppen als ionische oder potentiell ionische Gruppen enthalten, wie die Salze von 2-(2-Amino-ethylamino)-ethansulfonsäure oder des Additionsproduktes von Diaminen wie z.B. Ethlendiamin oder Isophorondiamin und Acrylsäure (EP-A 0 916 647, Beispiel 1) sowie der Dimethylolpropionsäure.

Im Rahmen der vorliegenden Erfindung bedeutet "keine ionogenen oder ionisch hydrophilierend wirkenden Gruppen", dass im Allgemeinen bezogen auf das in der erfindungsgemäßen Dispersion enthaltene Reaktionsprodukt keine weniger als weniger beträgt als 100 Milliequivalente pro 100 g Polyurethanpolymer , bevorzugt weniger als 25 Milliequivalente, besonders bevorzugt weniger als ein Milliequivalent und ganz besonders bevorzugt weniger als 1 Milliequivalente pro 100 g des Polymers vorliegen.

Geeignete, gegebenenfalls mitzuverwendende Komponenten d) sind di- und/oder trifunktionelle Amine bzw. Hydroxyamine, die zur Kettenverlängerung bzw. zum Molekulargewichtsaufbau dienen. Durch die Kettenverlängerungsreaktion zwischen den Aminogruppen und den Isocyanatgruppen werden Harnstoffstruktureinheiten in den Polyurethanpolyacrylat-Dispersionen gebildet. Anteilig können gegebenenfalls auch Hydroxyamine mit nur einer Aminogruppe bzw. Monoamine mitverwendet werden, die dann als Kettenabbrecher wirken.

Exemplarisch genannt als Komponenten d) seien Ethylendiamin, 1,3-Propylendiamin, 1,6-Hexamethylendiamin, 1,4-Butandiamin, Hydrazin(hydrat), aminofunktionelle Polyethylenoxide oder Polypropylenoxide, die z.B. unter dem Namen Jeffamin^{®}, (Fa. Huntsman Corp. Europe, Belgien) erhältlich sind, alkoxysilangruppenhaltige Mono- oder Diamine, Diethylentriamin, Monoamine wie z.B. Butylamin oder Diethylamin, Triethylentetramin, Isophorondiamin, Hydroxyamine wie z.B. Diethanolamin, Hydroxyethylethylendiamin und Bishydroxyethylethylendiamin. Bevorzugt sind lineare aliphatische Diamine wie Ethylendiamin, Hydrazin(hydrat) oder 1,6-Hexamethylendiamin sowie gegebenenfalls aliphatische Triamine wie Diethylentriamin.

Falls Komponente d) erfindungsgemäß eingesetzt wird, so wird sie in einer Menge eingesetzt, dass der Kettenverlängerungsgrad 30 bis 200%, bevorzugt 50 bis 150%, besonders bevorzugt 70 bis 110%, beträgt.

Als Kettenverlängerungsgrad definiert ist das Verhältnis der Menge an Äquivalenten an Aminogruppen der Komponente d) zur Menge der Äquivalenten an Isocyanatgruppen des Prepolymeren A), welches durch Umsetzung der Komponenten a), b), c) und gegebenenfalls e) erhalten wird. Ein Kettenverlängerungsgrad von 100% gemäß dieser Definition wird erhalten, wenn die Menge an Äquivalenten an Aminogruppen der Komponente d) exakt der Menge an Äquivalenten an Isocyanatgruppen des Prepolymeren A) entspricht.

Gegebenenfalls mitzuverwendende Komponenten e) sind sonstige monomere, oligomere und/oder polymere Substanzen, die gegebenenfalls auch weitere ungesättigte Gruppen aufweisen können. Dies können z.B. niedermolekulare Alkohole wie Butandiol, Hexandiol, Neopentylglykol, Diethylenglykol, Triethylenglykol, Propylenglykol, Dipropylenglykol, Tetraethylenglykol und/oder Trimethylolpropan, ethoxylierte und/oder propoxylierte Diole und/oder Triole z.B. auf Basis von Diethylenglykol oder Trimethylolpropan, Polycarbonatdiole des Molekulargewichts 700 bis 2200 g/mol, Polyetherdiole des Molekulargewichts 300 bis 2000 g/mol, Polyesterdiole, ungesättigte Fettsäuren enthaltende Alkydharze, Monoalkohole wie z.B. Benzylalkohol, Stearylalkohol, 2-Ethylhexylalkohol, Oleylalkohol, Butylglykol, Butyldiglykol, Umsetzungsprodukte von Monoepoxiden wie z.B. Cardura^{®} E10 und Monocarbosäuren und/oder Oligoester mit OH-Zahlen von 240 bis 500 KOH/g Substanz, bevorzugt 300 bis 500 mg KOH/g Substanz und einem Molekulargewicht Mw von 200 bis 700, bevorzugt 250 bis 390 g/mol, und/oder ungesättigte Gruppen enthaltende Oligomere und/oder hydroxyfunktionelle und/oder nicht isocyanatreaktive flüssige Polymere wie z.B. Epoxy(meth)acrylate, Ester(meth)acrylate, Polyester(meth)acrylate, Ether(meth)acrylate, Polyether(meth)acrylate und/oder Urethan(meth)acrylate. Über die Hydroxylgruppen ist ein teilweiser bzw. vollständiger Einbau in das Polymer möglich.

Oligoester werden erhalten durch Veresterung von Carbonsäuren wie z.B. Adipinsäure, Isophthalsäure, Phthalsäureanhydrid, Maleinsäureanhydrid, Fumarsäure, Tetrahydrophtalsäure, Hexahydrophthalsäure, Dimerfettsäure, Sojaölfettsäure, Benzoesäure und/oder Glutarsäure mit Alkoholen wie z.B. Neopentylglykol, Hexandiol, Ethylenglykol, Propylenglykol, Butandiol, Diethylenglykol, Dipropylenglykol, 1,4-Cyclohexandimethanol, 1,4-Cyclohexandiol, TCD-Diol, Trimethylolpropan, Glycerin und/oder Pentaerythrit. Bevorzugt ist die Verwendung von Adipinsäure, Isophthalsäure, Phthalsäureanhydrid, Tetrahydrophthalsäureanhydrid und/oder Hexahydrophthalsäureanhydrid mit Neopentylglykol, Ethylenglykol, Diethylenglykol, Glycerin und/oder Trimethylolpropan. Besonders bevorzugt ist die Verwendung von Isophthalsäure bzw. Phthalsäureanhydrid, ggf. in Kombination mit Adipinsäure und Neopentylglykol ggf. in Kombination mit Trimethylolpropan.

Es ist auch möglich, verschiedene Komponenten e) mit und ohne Hydroxylgruppen gleichzeitig einzusetzen. Dies führt dazu, dass ein Teil der Komponente d) in das Polymer eingebaut wird und ein Teil durch das Polymer dispergiert wird. Auf diese Art und Weise ist es möglich z.B. sogenannte Reaktivverdünner, das heißt bei Raumtemperatur fließfähige bzw. flüssige Substanzen, die keine hydrophilen Gruppen, dafür aber ungesättigte, für eine UV-Härtung geeignet Gruppen aufweisen mit zu dispergieren und so stabile erfindungsgemäße Dispersionen, z.B. mit besonders hohen Anteilen an polymerisierbaren Gruppen oder mit chemisch unterschiedlichem Polymer- bzw. Oligomerrückgrat zu erhalten.

In einer bevorzugten Ausführungsform werden als Komponente e) niedermolekulare Diole wie Butandiol, Hexandiol, Neopentylglykol, Ethylenglykol, Propylenglykol und/oder Polymerdiole wie z.B. Polycarbonatdiole, Polesterdiole oder Epoxyacrylate, Esteracrylate, Polyesteracrylate und/oder Monoalkohole wie z.B. Benzylalkohol und/oder Umsetzungsprodukte aus Monoepoxiden, wie z.B. Cardura^{®} E10, mit ungesättigte Fettsäuren eingesetzt.

In einer weiteren bevorzugten Ausführungsform werden als Komponente e) Oligoester mit OH-Zahlen von 240 bis 500 mg KOH/g, bevorzugt 300 bis 500 mg KOH/g Substanz und einem Molekulargewicht Mw von 200 bis 700 g/mol, bevorzugt 250 bis 390 g/mol, in einer Menge von 0,5 bis 25 Gew-% eingesetzt.

Die erfindungsgemäße Dispersion kann auch in Mischung mit anderen wässrigen Dispersionen eingesetzt werden. Dies können Dispersionen sein, die ebenfalls ungesättigte Gruppen enthalten, wie z.B. ungesättigte, polymerisierbare Gruppen enthaltende Dispersionen auf Polyester-, Polyurethan-, Polyepoxid-, Polyether-, Polyamid-, Polysiloxan-, Polycarbonat-, Polymerisat- und/oder Polyacrylatbasis.

Es können auch Dispersionen z.B. auf Basis von Polyestern, Polyurethanen, Polyepoxiden, Polyethern, Polyamiden, Polyvinylestern, Polyvinylethern, Polysiloxanen, Polycarbonaten, Polymerisaten oder Polyacrylaten zugemischt werden, die funktionelle Gruppen, wie z.B. Alkoxysilangruppen, Hydroxygruppen oder Isocyanatgruppen enthalten. So können z.B. dual cure Systeme hergestellt werden, die über zwei verschiedene Mechanismen ausgehärtet werden können.

Beschichtungsmittel, enthaltend die erfindungsgemäßen UV-härtbaren Dispersionen auf Polyisocyanatbasis, sowie Vernetzer auf Basis von Aminoharzen und/oder Polyisocyanaten und/oder blockierten Polyisocyanten sind ebenfalls Gegenstand der vorliegenden Erfindung.

Geeignete Aminovernetzerharze sind z. B. solche auf Melamin- oder Harnstoffbasis. Geeignete Polyisocyanate sind z.B. solche wie unter der Beschreibung von a) genannt sind. Grundsätzlich geeignete Hydrophilierungsmittel für die Polyisocyanate, wie z.B auf Polyetherbasis sind in der Beschreibung von c) genannt. Geeignete Blockierungsmittel sind z.B. Methanol, Ethanol, Butanol, Hexanol, Benzylakohol, Acetoxim, Butanonoxim, Caprolactam, Phenol, Diethylmalonat, Dieethylmalonat, Dimethylpyrazol, Triazol, Dimethyltriazol, Acetessigester, Diisopropylamin, Dibutylamin, tert.-Butylbenzylamin, Cyclopentanoncarboxyethylester, Dicyclohexylamin und/oder tert.-Butylisopropylamin.

Es können auch Dispersionen auf Basis von auf Polyestern, Polyurethanen, Polyepoxiden, Polyethern, Polyamiden, Polysiloxanen, Polyvinylethern, Polybutadienen, Polyisoprenen, Chlorkautschuken, Polycarbonaten, Polyvinylestern, Polyvinylchloriden, Polymerisaten oder Polyacrylaten zugemischt werden, die keine funktionellen Gruppen aufweisen.

Ebenfalls zu Kombination mit den erfindungsgemäßen Dispersionen geeignet sein können sogenannte Reaktivverdünner, niedrigviskose Verbindungen mit ungesättigten Gruppen, wie z.B. Hexandiolbisacrylat, Trimethylolpropantrisacrylat, Trimethlolpropandiacrylat, Pentaerythrittetraacrylat, Dipentaerythrithexaacrylat oder Diepoxidbisacrylate auf Bisphenol A Basis. Gegenstand der vorliegenden Erfindung sind auch Bindemittelkombinationen, enthaltend die erfindungsgemäßen UV-härtbaren Dispersionen auf Polyisocyanatbasis, sowie ein oder mehrere weitere Dispersionen.

Die erfindungsgemäße Dispersion kann auch in Mischung mit nicht wasserlöslichen oder wasserdispergierbaren, ungesättigte Gruppen enthaltenden Oligomeren oder Polymeren eingesetzt werden, wobei die nicht wasserlöslichen bzw. wasserdispergierbaren, ungesättigte Gruppen enthaltenden Oligomeren bzw. Polymeren der erfindungsgemäßen Dispersion vor dem Dispergieren zugesetzt werden, wodurch die erfindungsgemäße Dispersion als polymere Emulgatoren für diese Substanzen dienen. Bevorzugt Mischungen sind Bindemittelkombinationen, enthaltend die erfindungsgemäße Dispersion, sowie nicht wasserlösliche oder wasserdispergierbare, ungesättigte Gruppen enthaltende Oligomere oder Polymere.

Gegenstand der Erfindung ist auch ein Verfahren zur Herstellung der erfindungsgemäßen Dispersion, wobei durch Umsetzung der Komponenten b) und c), gegebenenfalls zusammen mit e), in einem oder mehreren Reaktionsschritten, mit einem Überschuss an Komponente a) ein isocyanatfunktionelles Prepolymer A) erhalten wird, gefolgt durch den Dispergierschritt durch Zugabe von Wasser zum Prepolymer A) bzw. Überführen des Prepolymeren A) in eine wässrige Vorlage, gegebenenfalls gefolgt durch einen Kettenverlängerungsschritt durch Zugabe der Komponente d).

Gegenstand der Erfindung ist auch ein Verfahren zur Herstellung der erfindungsgemäßen Dispersion, wobei durch Umsetzung der Komponenten a), b), und c) gegebenenfalls zusammen mit e), in einem oder mehreren Reaktionsschritten, mit einem Überschuss an Komponente a) ein isocyanatfunktionelles Prepolymer A) erhalten wird, gegebenenfalls gefolgt durch einen Kettenverlängerungsschritt durch Zugabe der Komponente d), gefolgt durch den Dispergierschritt durch Zugabe von Wasser zum Prepolymer A) bzw. Überführen des Prepolymeren A) in eine wässrige Vorlage.

Die erfindungsgemäßen Dispersionen weisen Feststoffgehalte (nicht flüchtige Anteile) von im Allgemeinen 25 bis 65 Gew.-%, bevorzugt von 35 bis 60 Gew.-% auf.

In den erfindungsgemäßen Verfahren kann bei der Herstellung des Prepolymeren A) ein organisches Lösemittel und/oder ein Katalysator eingesetzt werden. Geeignete Katalysatoren zur Herstellung der Prepolymeren A) bzw. der erfindungsgemäßen Dispersionen sind prinzipiell alle, die die Umsetzung von Isocyanatgruppen mit Hydroxylgruppen katalysieren, wie z.B. tertiäre Amine, Zinn-, Zink-, Zirkonium-, Kupfer- und/oder Wismuthverbindungen, bevorzugt Triethylamin, Ethyldiisopropylamin, Dimethylcyclohexylamin, N-Methylmorpholin, 1,4-Diazabicyclo-[2,2,2]-oktan, Zinndioktoat oder Dibutylzinndilaurat. Ebenfalls geeignet sind Salze des Zinks, des Titans, des Molybdän. Geeignete Mengen sind z.B. 0,002 bis 1 Gew.-%, bevorzugt 0,01 bis 0,1 Gew. -%. Die Umsetzung kann auch ohne Verwendung eines Katalysators durchgeführt werden.

Die Herstellung der erfindungsgemäßen Dispersionen erfolgt im Allgemeinen bei 20 bis 150 °C, bevorzugt bei 25 bis 75 °C.

Die gegebenenfalls vorhandene Komponente d) kann im erfindungsgemäßen Verfahren mit Wasser und/oder organischen Lösemitteln verdünnt vorliegen. Das optional eingesetzte Lösemittel kann anschließend destillativ abgetrennt werden. Eine Herstellung ohne Verwendung von Lösemitteln ist möglich, bevorzugt erfolgt jedoch eine Herstellung in organischen Lösemitteln.

Die erfindungsgemäße Dispersion enthält im Allgemeinen weniger als 5 Gew.-%, bevorzugt weniger als 1 Gew.-% und besonders bevorzugt weniger als 0,5 Gew.-% an organischen Lösemitteln.

Bevorzugt ist die Herstellung in 3 bis 50 Gew. -% (nicht flüchtiger Anteil der acetonischen Lösung), besonders bevorzugt in 5 bis 25 Gew. -% Aceton mit anschließender destillativer Entfernung des Lösemittels nach Herstellung der Dispersion bzw. während des Dispergierschritts.

Geeignete Lösemittel sind prinzipiell alle Lösemittel bzw. Lösemittelgemische, die nicht mit den Reaktionskomponenten reagieren, wie z.B. N-Butylpyrrolidon, Butylacetat, Ethylacetat, Methoxypropylacetat, Diethylenglykoldimethylether, Dioxan, Dimethylformamid, Xylol, Toluol, Solvent Naphta, Cyclohexanon, Methylisobutylketon, Diethylketon, Methylethylketon, Aceton. Einige dieser Lösemittel können anschließend ganz oder teilweise durch Destillation entfernt werden. Es ist auch möglich nach Herstellung der erfindungsgemäßen Dispersion weitere Lösemittel, z.B. hydroxfunktionelle Lösemittel, wie z.B. Butyldiglykol, Methoxypropanol oder Butylglykol zuzusetzen.

Die erfindungsgemäße Dispersion kann zur Herstellung von Glasfaserschlichten verwendet werden.

Die vorliegende Erfindung betrifft daher auch die Verwendung der erfindungsgemäßen Dispersion zur Herstellung von Glasfaserschlichten.

Die vorliegende Erfindung betrifft auch die Glasfaserschlichte enthaltend mindestens eine erfindungsgemäße Dispersion.

Die vorliegende Erfindung betrifft auch Glasfasern versehen mit einer Schlichte erhältlich unter Verwendung der erfindungsgemäßen Dispersion.

Eine Glasfaserschlichte enthält im Allgemeinen die erfindungsgemäße Dispersion, ggf. mindestens ein Bindemittel und ggf. Hilfs- und Zusatzmittel.

Zur Herstellung der wässrigen Schlichte-Zusammensetzung werden die vorliegenden Bestandteile bevorzugt nacheinander in beliebiger Reihenfolge oder gleichzeitig miteinander vermischt.

Die erfindungsgemäße, bevorzugt wässrige, Glasfaserschlichte kann gegebenenfalls weitere Bindemittel enthalten, beispielsweise Polyurethandispersionen, Polyacrylatdispersionen, Polyurethan-Polyacrylat-Hybriddispersionen, Polyvinylether- oder Polyvinylesterdispersionen, Polystyrol- oder Polyacrylnitrildispersionen, auch in Kombination mit weiteren blockierten Polyisocyanaten und Aminovernetzerharzen wie z.B. Melaminharzen. In einer bevorzugten Ausführungsform werden außer der erfindungsgemäße Dispersion keine weiteren Bindemittel verwendet.

Die erfindungsgemäße Glasfaserschlichte kann die üblichen Hilfs- und Zusatzmittel enthalten, wie z.B. Entschäumungsmittel, Verdickungsmittel, Verlaufsmittel, Dispergierhilfsmittel, Katalysatoren, Hautverhinderungsmittel, Antiabsetzmittel, Antioxidantien, Weichmacher, Reaktivverdünner, Emulgatoren, Biozide, Haftvermittler, z.B. auf Basis der bekannten nieder- bzw. höhermolekularen Silane, Gleitmittel, Netzmittel, Antistatika.

Als Haftvermittler werden z.B. die bekannten Silan-Haftvermittler verwendet, beispielsweise 3-Aminopropyltri-methoxy- bzw. triethoxysilan, N-(2-Aminoethyl)-3-aminopropyltrimethoxysilan, 3-Glycidylpropyltrimethoxysilan, Vinyltrimethoxysilan, Vinyltriethoxysilan oder 3-Methacryloxypropyltriethoxysilan. Die Konzentration der Silanhaftvermittler in der erfindungsgemäßen Glasfaserschlichte beträgt bevorzugt 0,05 bis 2 Gew.-%, besonders bevorzugt 0,15 bis 0,85 Gew.-%, jeweils bezogen auf die gesamte Schlichte.

Die erfindungsgemäße Glasfaserschlichte kann ein oder mehrere nichtionische und/oder ionische Gleitmittel enthalten, die z.B. aus folgenden Stoffgruppen ausgewählt sein können: Polyalkylenglykolether von Fettalkoholen oder Fettaminen, Polyalkylenglykolether und Glycerinester von Fettsäuren mit 12 bis 18 Kohlenstoffatomen, Polyalkylenglykole, höhere Fettsäureamide mit 12 bis 18 Kohlenstoffatomen von Polyalkylenglykolen und/oder Alkylenaminen, quartäre Stickstoffverbindungen, z.B. ethoxylierte Imidazoliniumsalze, Mineralöle und Wachse. Das oder die Gleitmittel werden bevorzugt in der Gesamtkonzentration von 0,05 bis 1,5 Gew.-%, bezogen auf die gesamte Glasfaserschlichte, angewendet.

Die erfindungsgemäße Glasfaserschlichte kann ein oder mehrere Antistatika, wie z.B. Lithiumchlorid, Ammoniumchlorid, Cr-III-Salze, organische Titanverbindungen, Arylalkylsulfate- oder Sulfonate, Arylpolyglykolethersulfonate oder quartäre Stickstoffverbindungen, enthalten. Die Antistatika werden bevorzugt in Konzentrationen von 0,01 bis 0,8 Gew.-%, bezogen auf die gesamte Glasfaserschlichte, angewendet.

Darüber hinaus kann die erfindungsgemäße Glasfaserschlichte gegebenenfalls noch weitere dem Stand der Technik nach bekannte Hilfs- und Zusatzstoffe, wie sie beispielsweise in K.L. Loewenstein "The Manufacturing Technology of Continous Glass Fibres", Elsevier Scientific Publishing Corp., Amsterdam, London, New York, 1983, beschrieben sind, enthalten.

Die Herstellung der erfindungsgemäßen Glasfaserschlichte kann nach den an sich bekannten Methoden erfolgen. Beispielsweise wird in einem geeigneten Mischbehälter ca. die Hälfte des insgesamt benötigten Wassers vorgelegt und unter Rühren das Bindemittel der Härter, und anschließend das Gleitmittel und gegebenenfalls andere, übliche Hilfsmittel zugesetzt. Danach wird der pH-Wert auf bevorzugt 5 bis 7 eingestellt und nun nach Angaben des Herstellers (z.B. UCC, New York) hergestelltes Hydrolysat eines Haftvermittlers z.B. eines Trialkoxysilans zugesetzt. Nach einer weiteren Rührzeit von beispielsweise 15 Minuten ist die Schlichte gebrauchsfertig; gegebenenfalls wird der pH-Wert erneut auf 5 bis 7 angeglichen.

Die Glasfaserschlichte kann über beliebige Methoden auf die Glasfaser appliziert werden, beispielsweise mit Hilfe geeigneter Vorrichtungen, wie z.B. Sprüh- oder Walzapplikatoren.

Geeignete Glasfasern sind sowohl die für die Glasseidenfabrikation verwendeten, bekannten Glastypen wie E-, A-, C-, und S-Glas als auch die anderen an sich bekannten Erzeugnisse der Glasfaserhersteller. Bevorzugt sind E-Glasfasem, die für die Herstellung von Endlosglasfasern aufgrund ihrer Alkalifreiheit, hohen Zugfestigkeit und hohen Elastizitätsmodul für die Verstärkung von Kunststoffen, eingesetzt werden.

Das Verfahren zur Herstellung, das Verfahren der Beschlichtung und die Nachbearbeitung der Glasfasern ist bekannt und beispielsweise in K.L. Loewenstein "The Manufacturing Technology of Continous Glass Fibres", Elsevier Scientific Publishing Corp., Amsterdam, London, New York, 1983, beschrieben.

Üblicherweise wird die Glasfaserschlichte auf die mit hoher Geschwindigkeit aus Spinndüsen gezogenen Glasfilamente sofort nach deren Erstarren, d.h. noch vor dem Aufwickeln aufgetragen. Es ist aber auch möglich, die Fasern im Anschluss an den Spinnprozess in einem Tauchbad zu beschlichten. Die beschlichteten Glasfasern können entweder nass oder trocken beispielsweise zu Schnittglas verarbeitet werden. Der Anteil der Schlichte beträgt, bezogen auf die beschlichteten Glasfasern, bevorzugt 0,1 bis 5,0 Gew.-%, besonders bevorzugt 0,1 bis 3,0 Gew.-% und ganz besonders bevorzugt 0,3 bis 1,5 Gew.-%.

In einer Variante findet die Trocknung der beschlichteten Glasfaser mehrstufig statt: Zunächst wird durch Wärme, Konvektion, Wärmestrahlung und/oder entfeuchtete Luft Wasser und gegebenenfalls vorhandenes Lösungsmittel aus der Schlichte entfernt. Dann erfolgt die Härtung durch UV-Bestrahlung. Dabei kommen die üblichen Strahler nach dem Stand der Technik zum Einsatz. Bevorzugt werden Quecksilber Hoch- oder Mitteldruckstrahler, die gegebenenfalls durch Elemente wie Gallium oder Eisen dotiert sein können. Es kann zweckmäßig sein auch mehrere Strahler hintereinander, nebeneinander oder in beliebigen dreidimensionalen Anordnungen zu kombinieren. Weiterhin kann es zweckmäßig sein, die UV-Bestrahlung bei erhöhten Temperaturen, bei 30 bis 200 °C, durchzuführen.

In einer anderen Variante findet im Wesentlichen eine physikalische Trocknung der beschlichteten Glasfaser statt: Es wird durch Wärme, Konvektion, Wärmestrahlung und/oder entfeuchtete Luft Wasser und gegebenenfalls vorhandenes Lösungsmittel aus der Schlichte entfernt, so dass die enthaltenen Methacrylatgruppen im Wesentlichen in dieser Stufe nicht reagieren, sondern als Methacrlyatgruppen erhalten bleiben. Diese Variante ist bevorzugt.

Die beschlichteten Glasfasern können anschließend in Matrixpolymere eingearbeitet werden. Als Matrixpolymere können eine Vielzahl von Thermoplasten oder duroplastisch härtbaren Polymeren verwendet werden. Beispielsweise sind als thermoplastische Polymere geeignet: Polyolefine wie Polyethylen oder Polypropylen, Polyvinylchlorid, Polymerisate wie Styrol/Acrylnitril-Copolymere, ABS, Polymethacrylat oder Polyoxymethylen, aromatische und/oder aliphatische Polyamide wie Polyamid-6 oder Polyamid-6,6, Polykondensate wie Polycarbonat, Polyethylenterephthalat, flüssigkristalline Polyarylester, Polyarylenoxid, Polysulfon, Polyarylensulfid, Polyarylsulfon, Polyethersulfon, Polyarylether oder Polyetherketon oder Polyaddukte wie Polyurethane. Als duroplastisch härtbare Polymere seien beispielsweise genannt: Epoxidharze, ungesättigte Polyesterharze, Vinylharze, Acrlyat-funktionelle Harze, Methacrlyat-funktionelle Harze, Phenolharze Aminharze, Polyurethanharze, Polyisocyanurate, Epoxid/Isocyanurat-Kombinationsharze, Furanharze, Cyanuratharze und Bismaleinimidharze. Die Einarbeitung in die Polymermatrix kann nach den allgemein üblichen, dem Fachmann, bekannten Methoden (wie z.B. Extrudierung) erfolgen. In einer bevorzugten Variante enthalten die ungehärteten Matixbausteine doppelbindungenshaltige Gruppen wie beispielsweise Allygruppen, Vinylgruppen, Acrylatgruppen olefinische Gruppen oder Methyacrlyatgruppen. Bevorzugt werden diese dann ausgehärtet, beispielsweise initiiert durch UV-Licht, Elektronenstrahlung, Hitze, Radikalstarter oder eine Kombination aus den genannten Methoden. Die Aushärtung kann nach den allgemein üblichen, dem Fachmann, bekannten Methoden erfolgen.

Die vorliegende Erfindung betrifft auch ein Verfahren zur Herstellung von glasfaserverstärkten Kunststoffen, mindestens umfassend die folgenden Schritte:
(A) Aufbringen der erfindungsgemäßen Glasfaserschlichte auf Glasfasern, um beschlichtete Glasfasern zu erhalten,
(B) Einbringen der beschlichteten Glasfasern in eine Kunststoffmatrix, und
(C) Zumindest teilweise chemische Reaktion aus Methacrylatruppen der Glasfaserschlichte mit der Gruppen der Kunststoffmatrix unter Entstehung kovalenter Bindungen, um den glasfaserverstärkten Kunststoff zu erhalten.

Geeignete Kunststoffe sind weiter oben bereits genannt. Verfahrensparameter wie beispielsweise Temperatur, Druck, geeignete Vorrichtungen etc. sind dem Fachmann an sich bekannt.

Die vorliegende Erfindung wird an Hand von Beispielen erläutert.

### Beispiel

### Eingesetzte Chemikalien:

| | |
|---|---|
| Desmodur^{®} Ultra N 3300 | Isocyanurat auf Basis von Hexamethylendiisocyanat, Covestro Deutschland AG, Leverkusen, DE |

Die weiteren Chemikalien wurden, soweit nicht anders erwähnt, von Sigma-Aldrich Chemie GmbH, Taufkirchen, DE, bezogen.

Sofern nicht abweichend vermerkt, beziehen sich alle Prozentangaben auf Gewichtsprozent (Gew.-%).

Sofern nicht abweichend vermerkt, wurden alle analytischen Messungen bei einer Temperatur von 23 °C durchgeführt.

Die angegebenen Viskositäten wurden mittels Rotationsviskosimetrie nach DIN 53019-2008 bei 23 °C mit einem Rotationsviskosimeter der Firma Anton Paar Germany GmbH, Ostfildern, DE bestimmt.

NCO-Gehalte wurden, wenn nicht ausdrücklich anders erwähnt, volumetrisch gemäß DIN-EN ISO 11909-2007 bestimmt.

Die angegebenen Partikelgrößen wurden mittels Laserkorrelations-Spektroskopie (Gerät: Malvern Zetasizer 1000, Malver Inst. Limited) nach Verdünnung der Probe mit entmineralisiertem Wasser bestimmt.

Die Festkörpergehalte wurden durch Erhitzen einer ausgewogenen Probe auf 120 °C ermittelt. Bei Gewichtskonstanz wurde durch erneutes Auswiegen der Probe der Festkörpergehalt berechnet.

Die Kontrolle auf freie NCO-Gruppen wurde mittels IR-Spektroskopie (Bande bei 2260 cm⁻¹) durchgeführt.

Als Lagertest wurden je 250 ml der Dispersion abgefüllt und sowohl bei Raumtemperatur als auch bei 40 °C gelagert. Es erfolgte eine Sichtkontrolle, ob sich Bodensatz bildete. Proben mit Bodensatz wurden als nicht stabil bewertet.

### Erfindungsgemäßes Beispiel

In einer Standard-Rührapparatur wurden 1261 g Desmodur Ultra N 3300 0,9 g Zinn(II)chlorid 0,05 g Phenothiazin sowie 0,5 g BHT in 240 g Aceton vorgelegt. vorgelegt und auf 50 °C aufgeheizt. Anschließend gab man 660 g 2-Hydroxyethylmethacrylat langsam zu der Lösung und ließ 5 Stunden in siedendem Aceton reagieren.
Dann wurden 470 g Methoxypolyethylenglykol mit einer zahlenmittleren Molmasse von 750 g/mol sowie 26 g 1,4-Butandiol zugesetzt, und es wurde bei unter Sieden gerührt, bis IR-spektroskopisch keine Isocyanatgruppen mehr nachweisbar waren.

Dann wurden unter starkem Rühren 2960 g entionisiertes Wasser zugegeben, und das Aceton wurde im Vakuum bei 40°C abdestilliert.

Die erhaltene Dispersion hatte nachfolgende Eigenschaften:

| | |
|---|---|
| Feststoffgehalt: | ca. 44 Gew.-% |
| pH-Wert: | ca. 3,5 |
| Viskosität | ca. 110 mPa·s |
| Mittlere Partikelgröße (LKS): | 124 nm |

Die Dispersion war lagerstabil bei Raumtemperatur und bei 40 °C für mindestens 4 Wochen. Es bildete sich in diesem Zeitraum keine Phasentrennung.

### Beispielformulierung einer Glasfaserschlichte

Zur Prüfung auf grundsätzliche Eignung in allgemeinen Glasfaserschlichten wurde eine Beispielformulierung gemäß der folgenden Tabelle hergestellt und über 12 Tage bei Raumtemperatur gelagert.

### Beispielformulierung:

| Einsatzstoff | Masse [g] |
|---|---|
| Wasser (entmineralisiert) | 229,3 |
| Dispersion aus erfindungsgemäßem Beispiel | 15,0 |
| Essigsäure (60 gew.-%ig in Wasser) | 0,5 |
| Polyvinylpyrolidnon 40000 (20 gew.-%ig in Wasser) | 2,5 |
| 3-(Trimethoxysilyl)propyl methacrylat | 1,3 |
| 3-(2-Aminoethylamino)propyltrimethoxysilane | 1,5 |

Beobachtung: Im Verlauf von 12 Tagen bei Raumtemperatur konnten keine Änderungen der Viskosität sowie keine Phasentrennung beobachtet werden.

## Patentansprüche

1. Wässrige UV-härtbare Dispersion mindestens enthaltend ein Reaktionsprodukt aufgebaut aus
a) mindestens einem Polyisocyanat mit einer durchschnittlichen Isocyanat-Funktionalität von mindestens 2,2, von denen bevorzugt mindestens ein Polyisocyanat ein oligomeres Polyisocyanat mit Urethan-, Biuret-, Allophanat-, Iminooxadiazindion- und/oder Isocyanuratstruktureinheiten ist,
b) mindestens eine monohydroxyfunktionelle, Methacryloylgruppen aufweisende Verbindung,
c) mindestens eine Komponente, die nichtionisch hydrophilierend wirkende Gruppen enthält und mindestens eine isocyanatreaktive Gruppe aufweist,
d) gegebenenfalls mindestens ein di- und/oder polyfunktionelles Amin oder Hydroxyamin als Kettenverlängerer und
e) gegebenenfalls sonstige monomere, oligomere und/oder polymere Substanzen, die gegebenenfalls auch weitere ungesättigte Gruppen aufweisen können,
**dadurch gekennzeichnet, dass** das Reaktionsprodukt keine ionogenen oder ionisch hydrophilierend wirkenden Gruppen aufweist.

2. Dispersion vorliegende Reaktionsprodukt enthält bevorzugt
a) 35 bis 75 Gew. -%, besonders bevorzugt 40 bis 75 Gew.-%, ganz besonders bevorzugt 45 bis 65 Gew.-%, an Komponente a),
b) 10 bis 50 Gew. -%, besonders bevorzugt 12 bis 35 Gew.-%, ganz besonders bevorzugt 14 bis 32 Gew.-% an Komponente b),
c) 5 bis 40 Gew. -%, besonders bevorzugt 7 bis 30 Gew.-%, ganz besonders bevorzugt 15 bis 25 Gew.-% an Komponente c), und
d) gegebenenfalls 0,1 bis 10 Gew. -%, besonders bevorzugt 0,1 bis 9 Gew.-%, ganz besonders bevorzugt 0,1 bis 5 Gew.-% an Komponente d),
wobei sich die Prozentangaben von a) bis c) bzw. a) bis d) jeweils zu 100 Gew.-% ergänzen.

3. Dispersion gemäß Anspruch 1 oder 2, **dadurch gekennzeichnet, dass** die Polyisocyanatkomponente a) zu mindestens 40 Gew. -% aus bei Raumptemperatur flüssigen oligomeren Polyisocyanaten auf Basis von Hexamethylendiisocyanat mit Isocyanurat-, Biuret-, Uretdion-, Carbodiimid- und/oder Iminooxadiazindion-Struktureinheiten und zu höchstens 60 Gew. -% aus Isophorondiisocyanat, H₆-2,4- bzw. 2,6-Toluylidendiisocyanat, 1,6-Hexamethylendiisocyanat, 4,4'-Diisocyanato-dicyclohexylmethan und/oder 2,4'-Diisocyanato-dicyclohexylmethan und/oder 2,2'-Diisocyanato-dicyclohexyl-methan und/oder 2,4- bzw. 2,6-Toluylidendiisocyanat bzw. deren Umsetzungsprodukte mit Trimethylolpropan, Butandiol, Ethylenglykol, Diethylenglykol, Propylenglykol oder Neopentylglykol besteht.

4. Dispersion gemäß einem der Ansprüche 1 bis 3, **dadurch gekennzeichnet, dass** die Polyisocyanatkomponente a) zu mindestens 70 Gew.- % aus oligomeren Polyisocyanaten auf Basis von Hexamethylendiisocyanat mit Biuret-, Iminooxadiazindion- und/oder Isocyanuratstruktureinheiten und zu höchsten 30 Gew.-% aus Isophorondiisocyanat, 4,4'-Diisocyanato-dicyclohexylmethan und/oder 2,4'-Diisocyanato-dicyclohexyl-methan und/oder 2,2'-Diisocyanato-dicyclohexyl-methan und/oder 2,4- bzw. 2,6- Toluylidendiisocyanat besteht.

5. Dispersion gemäß einem der Ansprüche 1 bis 4, **dadurch gekennzeichnet, dass** diese 0,5 bis 40 Gew.%, an Komponente e) enthalt.

6. Dispersion gemäß einem der Ansprüche 1 bis 5, **dadurch gekennzeichnet, dass** mindestens ein monohydroxyfunktioneller Polyalkylenoxidpolyether mit einem Molekulargewicht von 500 bis 1100 g/mol als Komponente c) eingesetzt wird.

7. Dispersion gemäß einem der Ansprüche 1 bis 6, **dadurch gekennzeichnet, dass** die Komponente d) in solchen Mengen eingesetzt wird, dass der Kettenverlängerungsgrad bei 100 bis 200% liegt.

8. Dispersion gemäß einem der Ansprüche 1 bis 7, **dadurch gekennzeichnet, dass** sie eine Säurezahl unter 50 mg KOH/g Polymer, bevorzugt unter 20 mg KOH/g Polymer, besonders bevorzugt unter 10 mg KOH/g Polymer, und besonders bevorzugt unter 5 mg KOH/g Polymer, (Messung nach EN ISO 660 (Fassung von 2009)), aufweist.

9. Verfahren zur Herstellung der Dispersion gemäß einem der Ansprüche 1 bis 8, **dadurch gekennzeichnet, dass** durch Umsetzung der Komponenten a), b), und c) gegebenenfalls zusammen mit e), in einem oder mehreren Reaktionsschritten, mit einem Überschuss an Komponente a) ein isocyanatfunktionelles Prepolymer A) erhalten wird, gefolgt durch einen Kettenverlängerungsschritt durch Zugabe der Komponente d), gefolgt durch den Dispergierschritt durch Zugabe von Wasser zum Prepolymer A) bzw. Überführen des Prepolymeren A) in eine wässrige Vorlage.

10. Verfahren zur Herstellung der Dispersion gemäß einem der Ansprüche 1 bis 8, **dadurch gekennzeichnet, dass** durch Umsetzung der Komponenten b) und c), gegebenenfalls zusammen mit e), in einem oder mehreren Reaktionsschritten, mit einem Überschuss an Komponente a) ein isocyanatfunktionelles Prepolymer A) erhalten wird, gefolgt durch den Dispergierschritt durch Zugabe von Wasser zum Prepolymer A) bzw. Überführen des Prepolymeren A) in eine wässrige Vorlage, gefolgt durch einen Kettenverlängerungsschritt durch Zugabe der Komponente d).

11. Verwendung der Dispersion nach einem der Ansprüche 1 bis 8 zur Herstellung von Glasfaserschlichten.

12. Glasfaserschlichte mindestens enthaltend eine Dispersion nach einem der Ansprüche 1 bis 8.

13. Glasfasern versehen mit einer Schlichte erhältlich unter Verwendung einer Dispersion gemäß einem der Ansprüche 1 bis 8.

14. Verfahren zur Herstellung von glasfaserverstärkten Kunststoffen, mindestens umfassend die folgenden Schritte:
(A) Aufbringen der erfindungsgemäßen Glasfaserschlichte auf Glasfasern, um beschlichtete Glasfasern zu erhalten,
(B) Einbringen der beschlichteten Glasfasern in eine Kunststoffmatrix, und
(C) Zumindest teilweise chemische Reaktion aus Methacrylatruppen der Glasfaserschlichte mit der Gruppen der Kunststoffmatrix unter Entstehung kovalenter Bindungen, um den glasfaserverstärkten Kunststoff zu erhalten.

15. Glasfaserverstärkter Kunststoff, enthaltend Glasfasern gemäß Anspruch 13 oder Glasfasern, die mit einer Glasfaserschlichte gemäß Anspruch 12 beschlichtet sind.
